# EUROPEAN PATENT SPECIFICATION

(11) **EP 1 597 977 B1**
(45) Date of publication and mention of the grant of the patent: **05.05.2010**
(21) Application number: 05104202.6
(22) Date of filing: 18.05.2005
(51) Int. Cl.: A23L 1/217

(54) **Baked potato chips and their method and system of manufacture**
Gebackene Kartoffelchips, und Verfahren und Vorrichtung ihrer Herstellung
Chips de pomme de terre cuites au four, et méthode et systeme pour leur fabrication

(30) Priority: 20.05.2004 JP 2004151007
(43) Date of publication of application: 23.11.2005
(73) Proprietor: Central Bussan Co., Ltd., Yamanashi 400-0811 (JP)
(72) Inventor: Uwaya, Katsuhiko c/o Central Bussan Co., Ltd., Yamanashi-ken, 400-0811 (JP); Shimaoka, Koichi Kowa Kogyo Co., Ltd., Osaka-shi, Osaka 537-0013 (JP)
(74) Representative: Johnstone, Douglas Ian

(56) References cited:
- EP-A- 0 482 709
- GB-A- 2 290 216
- US-A- 3 519 432

## Description

The present invention relates to processed foods, such as a potato chip and the like, a manufacturing system for the processed foods, and a manufacturing method for the processed foods.

Most of the conventional processed foods, such as a potato chip and the like, are formed as products by, for example, peeling of raw potatoes, slicing of peeled potatoes, deep-frying of sliced potatoes, and then seasoning of deep-fried potatoes.

In the case of such processed foods as a potato chip and the like, a deep-frying treatment is provided. Thus, the products contain oil components in quantity, are high in calories, present problems of health maintenance, due to the presence of cholesterol components, and the like, and these features are not always desirable ones.

Patent Publication No. JP/P2000-253846A proposes a snack food for which no deep-frying is carried out, although raw materials completely different from those of the present invention are used, and a method of manufacturing a snack food that is completely different from that of the present invention is employed.

The snack food disclosed in Patent Publication No. JP/P2000-253846A is that obtained through a series of steps of peeling of white potatoes, pelletizing, steaming, drying, puffing, seasoning spraying, and drying (Means for Solving the Problem and FIG 1 in Patent Publication No. JP/P2000-253846A).

However, in the case of the snack food of Patent Publication No. JP/P2000-253846A, raw white potatoes are used as a raw material, and pelletized for manufacturing the snack food, although the deep-frying step is not included. Thus, the production cost is increased, and the product size and the product shape cannot be made uniform, resulting in products being non-uniform in size and shape. In addition, the snack food itself as a product has a finished shape which is substantially flat, and it is difficult to provide the snack food with a curved shape like a conventional potato chip, and the like.

EP-A-0482709 discloses a method of forming a low fat snack. Dough is formed from starch and water and the dough is then formed into a relatively flat sheet. The sheet is cut into snack pieces and the snack pieces are held by two mould halves during cooking with the snack pieces or mould halves being coated in oil.

US-A-3519432 discloses a method of forming a potato chip product. Potatoes and water are placed in a blender to form a potato mash which forms part of a dough. The dough is cut into pieces and the pieces are rolled to form wafers. These wafers are then cooked whilst being held between curved screens and thus form curved shapes.

GB-A-2290216 discloses a method of forming potato chips. Dough is formed from mixing potato granules and water and then rolled into a sheet. The sheet is cut into pieces and the pieces are placed in a mould which is passed through a baking device.

A problem to be solved by the present invention lies in that there is no processed food, such as a potato chip or the like, which has not been deep-fried, is low in calories and well suited for maintaining health, and also can be diversified while being made uniform in product shape.

According to one aspect of the present invention, there is provided a processed food, wherein a paste-form material or lump-form material obtained by mixing a dry raw potato material powder comprising potato granules, and the like, or potato flakes, and water is divided into individual chip-form materials, and this chip-form material is baked, while being sandwiched, **characterized in that** the chip-form material is subjected to deformation heating separate to the baking to form a product in the form of a curved chip wherein the chip-form material is subjected to said baking before the chip-form material is subjected to said deformation heating.

No deep-frying is performed to form the processed food. The processed food contains no oil components unlike those of a potato chip subjected to a conventional deep-frying treatment. The processed food is low in calories and is well suited for maintaining health. The processed food has a curved-chip shape and uses potato granules, and the like as a main raw material.

The paste-form material (a material rendered pasty) or lump-form material, or otherwise a dough, may include an auxiliary raw material(s) or a seasoning(s) mixed with the dry raw potato material powder and water, and the individual chip-form materials may be baked while being subjected to an appropriate pressure.

According to another aspect of the invention there is provided a manufacturing system for processed foods, comprising:
means for mixing a dry potato raw material powder comprising potato granules, and the like, or potato flakes, and water for preparation of a paste-form material or lump-form material;
dividing means for squeezing the paste-form material or lump-form material for division thereof into individual chip-form materials; and
baking means for baking each individual chip-form material while sandwiching it to form a chip-form article; characterized by
deformation heating means for heating the chip-form article to form a product in the form of a curved chip wherein the deformation heating means is arranged to subject the chip-form article to deformation heating separate from the baking means baking each individual chip-form material, and the baking means is arranged to subject each said individual chip-form material to baking before the deformation heating means subjects the chip-form article to deformation heating.

A series of manufacturing steps can use these means to continuously and efficiently manufacture a processed food which contains no oil components unlike those of a potato chip subjected to a conventional deep-frying treatment, is low in calories and well suited for maintaining health, and has a curved shape.

According to yet another aspect of the invention there is provided a manufacturing method for processed foods, comprising the steps of:
mixing a dry potato raw material powder comprising granules, and the like, or potato flakes, and water for preparation of a paste-form material or lump-form material;
squeezing the paste-form material or lump-form material for division thereof into individual chip-form materials; and
baking each individual chip-form material while sandwiching it to form a chip-form article; characterized by the step of
deformation heating the chip-form article to form a product in the form of a curved chip separate from the step of baking each individual chip-form material, wherein said baking step takes place before the deformation heating step.

The method has a dividing process for formation of individual chip-form materials, a baking step, and a deformation heating step. The method can be continuously and efficiently carried out for manufacturing a processed food which contains no oil components unlike those of a potato chip subjected to a conventional deep-frying treatment, is low in calories and well suited for maintaining health, and has a curved shape.

The purpose of providing processed foods which have not been deep-fried, are low in calories and well suited for maintaining health, and also can be diversified while being made uniform in product shape has been achieved by dividing a paste-form material or lump-form material obtained by mixing a dry raw material powder consisting of potato granules, and the like; and may include an auxiliary raw material(s) or seasoning(s) selected from common salt, Umami seasonings, seaweeds, spices, sesames, cereals, nuts, fishery products, vegetables, and the like; and water into individual chip-form materials, baking each individual chip-form material while appropriately pressurizing and sandwiching it, and deformation heating it to form a product in the form of a curved chip.

An embodiment of the present invention will now be described, by way of example, with reference to the accompanying drawings, in which:-
FIG. 1 is an explanatory view illustrating an outline of the manufacturing system and manufacturing process for processed foods of an embodiment of the present invention;
FIG. 2 is a perspective view illustrating an example of product obtained by the system shown in FIG 1;
FIG. 3 is a table giving an example of the properties of and the specifications for the potato granules and the like used in the manufacturing process; and
FIG. 4 is a perspective view illustrating an example of a potato chip which may be formed during the manufacturing process.

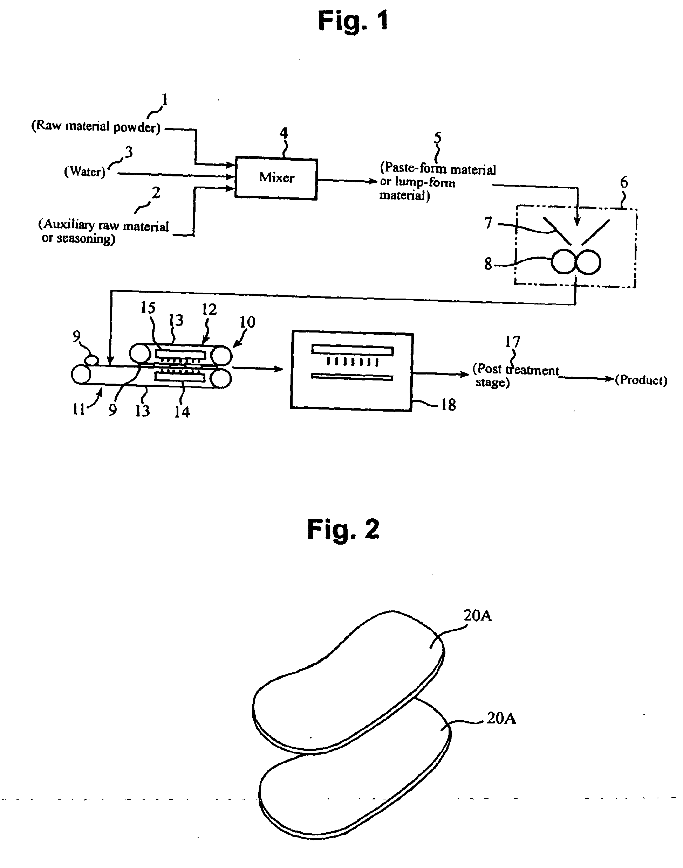

A potato chip 20A as shown in FIG 2, which is a processed food of the present embodiment, is a chip-form product of an appropriate size formed by dividing a paste-form material or lump-form material obtained by mixing a dry raw material powder (manufactured by Rixona, the Netherlands) consisting of potato granules, and the like; an auxiliary raw material(s) or seasoning(s) selected from common salt, Umami seasonings, seaweeds such as laver, spices, sesames, cereals such as germs, nuts such as peanut, fishery products such as shrimp, vegetables such as carrot, and the like; and water into individual chip-form materials, baking each individual chip-form material while appropriately pressurizing and sandwiching it, and deformation heating it.

In the present embodiment, a dry raw material powder consisting of potato granules, and the like is used as a paste-form material or lump-form material. However, in the present invention, a raw material containing a dry powder or a substance in flake form of potato as an ingredient may be used as an alternative to the dry raw material powder consisting of potato granules, and the like.

FIG. 1 shows an embodiment in which an auxiliary raw material(s) or seasoning(s) selected from common salt, Umami seasonings, seaweeds, spices, sesames, cereals, nuts, fishery products, vegetables, and the like is added to a dry raw material powder consisting of potato granules, and the like, and water, constituting a paste-form material or lump-form material of the potato chip 20A, which is a processed food of the present embodiment. However, in the present invention, it is optional whether or not to add an auxiliary raw material(s) or seasoning(s) selected from common salt, Umami seasonings, seaweeds, spices, sesames, cereals, nuts, fishery products, vegetables, and the like, and a paste-form material or lump-form material of the potato chip 20A, which is a processed food of the present embodiment, may be formed without the auxiliary raw material(s) or seasoning(s) being added.

The manufacturing system and manufacturing process for the potato chip 20A of the present embodiment will be described with reference to FIG. 1.

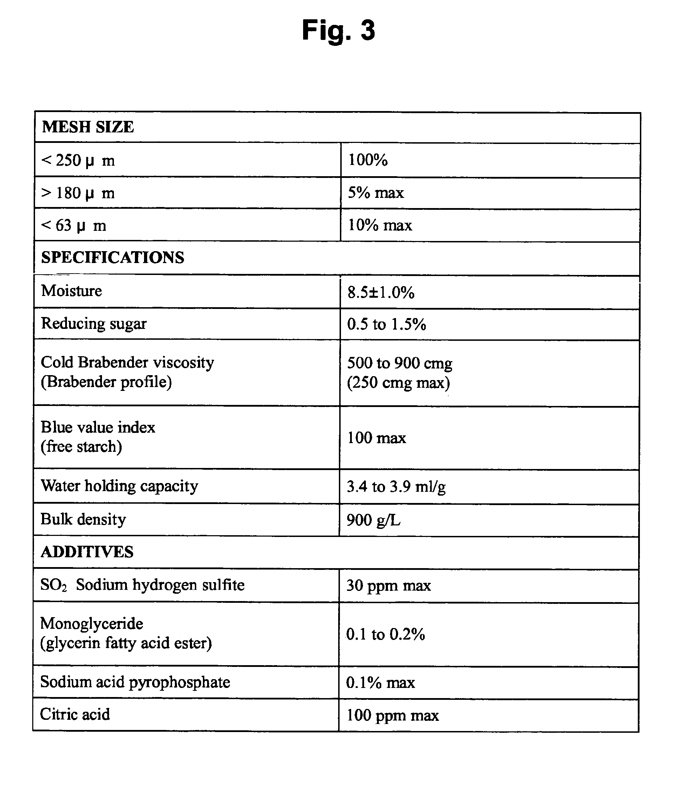

In the present embodiment, a dry raw material powder 1 consisting of potato granules, and the like, having the properties and meeting the specifications as given in FIG. 3; an auxiliary raw material(s) or seasoning(s) 2 selected from common salt, Umami seasonings, seaweeds, spices, sesames, cereals, nuts, fishery products, vegetables, and the like; and water 3 are prepared, charged into a mixing machine 4, and mixed to form a paste-form material or lump-form material 5.

Next, the obtained paste-form material or lump-form material 5 is placed in, for example, a squeezing machine 6 as dividing means having a hopper 7 and a squeezing roller 8. The paste-form material or lump-form material 5 is squeezed to be divided into individual chip-form materials 9.

In the example illustrated, the squeezing machine 6 is shown as that with a mechanism comprising a hopper 7 and a squeezing roller 8. However, in the present invention, the configuration of the squeezing machine is not limited to that of the example illustrated, but as a squeezing mechanism, a pump mechanism (not shown), for example, may be used for squeezing the paste-form material or lump-form material 5.

Next, each individual chip-form material 9 is fed to a sandwiching baking machine 10, which is baking means for baking while sandwiching the chip-form material 9.

In the present invention, the mechanism or method of the sandwiching baking machine 10 is not limited to that of the embodiment illustrated, but it may be any mechanism or method, provided that it is a mechanism or method with which the chip-form material 9 is baked while being sandwiched from above and under, for instance, as in the example illustrated, or a mechanism or method with which said chip-form material 9 is heated to be baked while being sandwiched between thermally conductive plates.

The sandwiching baking machine 10 in the present embodiment illustrated conveys said chip-form material 9, while applying an appropriate pressure thereto, sandwiching it between a lower conveyor 11 and an upper conveyor 12 which, each having a conveying chain or conveying belt 13 are configured to turn. The conveying chains or conveying belts 13 are supported at both ends, for example, and consist, for example, of sheets made of iron or sheets made of a casting, or otherwise sheets made of copper, or the like that are rotatably formed. The sandwiching baking machine 10 bakes both sides of the chip-form material 9 with flames and heat from a lower burner 14 and an upper burner 15; and conveys it out to the subsequent stage.

In the present invention, electric heaters may be used instead of the lower burner 14 and the upper burner 15 as shown in the drawing. In the present invention, although it is not shown, the sandwiching baking machine may also be configured to bake said chip-form material 9 while sandwiching it between a turntable and a vertically moving plate, wherein the turntable consists of a sheet made of iron or a sheet made of a casting, or otherwise a sheet made of copper, or the like adapted to rotate on a flat surface, and the vertically moving plate consists of a sheet made of iron or a sheet made of a casting, or otherwise a sheet made of copper, or the like that moves up and down above this turntable.

Further, as a preferred embodiment, the chip-form material 9 is sandwiched baked at a temperature of approx. 100 °C to 200 °C and a pressure of 0.5 to 5.0 kg/cm².

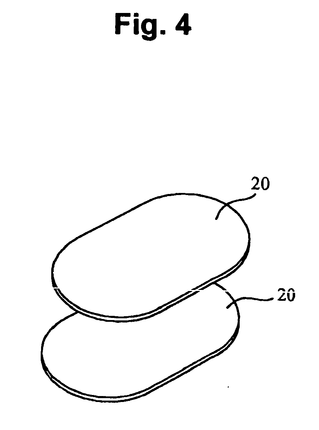

The chip-form material 9 conveyed out from said sandwiching baking machine 10 can be a potato chip 20 which is, for example, flat and rectangular or is in the shape of a thin, elliptical or circular disk as shown in FIG 4, or stick shaped.

A gas oven 18 is provided after the sandwiching baking machine 10 and comprises deformation heating means for heating a chip-form material (a chip-form article) 9 to form a potato chip 20A, which is a product in the form of a curved chip (in curled form, twisted form, or the like),

In the present invention, an electric heater, or the like may be used instead of the gas oven 18 as shown in the drawing.

According to the manufacturing system and manufacturing process of this embodiment, properly setting the time period for baking both sides of the chip-form material 9 in said baking machine 10 while appropriately pressurizing and sandwiching it, and the time period for heating in the gas oven 18 makes it possible to manufacture a curved potato chip 20A (in a curled shape) as shown in FIG 2.

The chip-form material 9 which is taken out from said gas oven 18 can be a potato chip 20A as shown in FIG 2 that provides a product, as it is, or can also be a potato chip 20A in a curved shape as shown in FIG 2 that provides a product seasoned by spraying a desired seasoning material(s), or the like, as required, at a post treatment stage 17 in the manufacturing system and manufacturing process.

To form the potato chip 20A, which is a processed food of the present invention obtained by the manufacturing system and manufacturing process of the present embodiment, a dry powder of potato is used as a main component and no deep-frying process is provided. Thus, a health food that contains no oil components like those of a potato chip subjected to a conventional deep-frying treatment, and is low in calories and well suited for maintaining health and further has a curved shape can be produced.

According to the manufacturing system and manufacturing process for the potato chip 20A pertaining to this embodiment, a series of manufacturing steps of generating a paste-form material or lump-form material 5 with a mixing machine 4, transforming it into individual chip-form materials 9 with a squeezing machine 6, baking each individual chip-form material 9 to a potato chip 20 with a baking machine 10, while appropriately pressurizing and sandwiching it, and deformation heating it with a gas oven 18 can be continuously and efficiently carried out for manufacturing a potato chip 20A in a curved shape as a health food that contains no oil components unlike those of a potato chip subjected to a conventional deep-frying treatment. The potato chip 20A is low in calories and well suited for maintaining health.

In FIG 3, the approximate properties of and specifications for said potato granules, and the like are given as an example; the mesh size of a dry powder of potato used as a main component being smaller than 250 µm, the values of moisture, reducing sugar, cold Brabender viscosity, blue value index, water holding capacity, and bulk density being as given in FIG 3, and sodium hydrogen sulfite, monoglyceride, sodium acid pyrophosphate, citric acid, and the like being contained as additives.

The present invention is widely applicable to various processed foods made from such materials as root and tuber crops other than potato, corns, beans, and the like, and as manufacturing means therefor, as well as being applied to the above-mentioned potato chips and as manufacturing means therefor.

## Claims

1. A processed food, wherein a paste-form material or lump-form material (5) obtained by mixing a dry raw potato material powder (1) comprising potato granules, and the like, or potato flakes, and water (3) is divided into individual chip-form materials (9), and this chip-form material is baked, while being sandwiched, **characterized in that** the chip-form material is subjected to deformation heating separate to the baking to form a product in the form of a curved chip (20A) wherein the chip-form material is subjected to said baking before the chip-form material is subjected to said deformation heating.

2. The processed food as claimed in claim 1, wherein said paste-form material or lump-form material (5) contains an auxiliary raw material(s) or a seasoning(s) (2) selected from common salt, Umami seasonings, seaweeds, spices, sesames, cereals, nuts, fishery products, vegetables, and the like.

3. The processed food as claimed in claim 1 or 2, wherein said baking while sandwiching involves pressurizing in the baking.

4. The processed food as claimed in claim 1, 2 or 3, wherein the mechanism for said baking while sandwiching is configured such that said chip-form material (9) is heated to be baked while being sandwiched from above and under.

5. The processed food as claimed in any preceding claim, wherein the mechanism (10) for said baking while sandwiching is configured such that said chip-form material (9) is heated to be baked while being sandwiched between thermally conductive plates (14,15).

6. A manufacturing system for processed foods, comprising:
means (4) for mixing a dry potato raw material powder (1) comprising potato granules, and the like, or potato flakes, and water (3) for preparation of a paste-form material or lump-form material (5);
dividing means (6) for squeezing the paste-form material or lump-form material (5) for division thereof into individual chip-form materials; and
baking means (10) for baking each individual chip-form material (9) while sandwiching it to form a chip-form article; **characterized by**
deformation heating means (18) for heating the chip-form article to form a product (20A) in the form of a curved chip wherein the deformation heating means (18) is arranged to subject the chip-form article to deformation heating separate from the baking means (10) baking each individual chip-form material, and the baking means (10) is arranged to subject each said individual chip-form material to baking before the deformation heating means (18) subjects the chip-form article to deformation heating.

7. The manufacturing system as claimed in claim 6, wherein said paste-form material or lump-form material (5) contains an auxiliary raw material(s) or a seasoning(s) selected from common salt, Umami seasonings, seaweeds, spices, sesames, cereals, nuts, fishery products, vegetables, and the like.

8. The manufacturing system as claimed in claim 6 or 7, wherein said baking while sandwiching involves pressurizing in the baking.

9. The manufacturing system as claimed in claim 6, 7 or 8, wherein the mechanism (10) for said baking while sandwiching is configured such that said chip-form material is heated to be baked while being sandwiched from above and under.

10. The manufacturing system as claimed in any one of claims 6 to 9, wherein the mechanism (10) for said baking while sandwiching is configured such that said chip-form material is heated to be baked while being sandwiched between thermally conductive plates (14,15).

11. A manufacturing method for processed foods, comprising the steps of:
mixing a dry potato raw material powder (1) comprising granules, and the like, or potato flakes, and water (3) for preparation of a paste-form material or lump-form material (5);
squeezing the paste-form material or lump-form material (5) for division thereof into individual chip-form materials (9); and
baking each individual chip-form material (9) while sandwiching it to form a chip-form article; **characterized by** the step of
deformation heating the chip-form article to form a product (20A) in the form of a curved chip separate from the step of baking each individual chip-form material (9), wherein said baking step takes place before the deformation heating step.

12. The manufacturing method as claimed in claim 11, wherein said paste-form material or lump-form material (5) contains an auxiliary raw material(s) or a seasoning(s) selected from common salt, Umami seasonings, seaweeds, spices, sesames, cereals, nuts, fishery products, vegetables, and the like.

13. The manufacturing method as claimed in claim 11 or 12, wherein said baking while sandwiching involves pressurizing in the baking.

14. The manufacturing method as claimed in claim 11, 12 or 13, wherein the mechanism (10) for said baking while sandwiching is configured such that said chip-form material (9) is heated to be baked while being sandwiched from above and under.

15. The manufacturing method as claimed in any one of claims 11 to 14, wherein the mechanism (10) for said baking while sandwiching is configured such that said chip-form material (9) is heated to be baked while being sandwiched between thermally conductive plates (14,15).

## Patentansprüche

1. Behandeltes Nahrungsmittel, bei dem pastöses oder stückiges Material (5), welches durch Mischen eines trockenen rohen Kartoffelmaterialpulvers (1), das Kartoffelgranulate und dergleichen oder Kartoffelflocken umfasst, und Wasser (3) erhalten wird, in individuelle Chip-förmige Materialien (9) geteilt wird und dieses Chip-förmige Material gebacken wird, während es übereinandergeschichtet ist, **dadurch gekennzeichnet, dass** das Chip-förmige Material getrennt von dem Backen einem Verformungserhitzen unter Bildung eines Produkts in Form eines gekrümmten Chips (20A) unterzogen wird, wobei das Chip-förmige Material dem Backen unterzogen wird, bevor das Chip-förmige Material dem Verformungserhitzen unterzogen wird.

2. Behandeltes Nahrungsmittel nach Anspruch 1, bei dem das pastöse oder stückige Material (5) ein oder mehrere zusätzliche Rohmaterialien oder eine oder mehrere zusätzliche Würzen (2) ausgewählt aus Kochsalz, Umami-Würzen, Meeresalgen, Gewürzen, Sesamkörnern, Cerealien, Nüssen, Fischereierzeugnissen, Gemüsen und dergleichen enthält.

3. Behandeltes Nahrungsmittel nach Anspruch 1 oder 2, bei dem das Backen in übereinandergeschichteter Anordnung Druckbeaufschlagung beim Backen beinhaltet.

4. Behandeltes Nahrungsmittel nach Anspruch 1, 2 oder 3, bei dem die Vorrichtung für das Backen in übereinandergeschichteter Anordnung so konfiguriert ist, dass das Chip-förmige Material (9) erhitzt wird, um übereinandergeschichtet von oben und unten gebacken zu werden.

5. Behandeltes Nahrungsmittel nach einem der vorhergehenden Ansprüche, bei dem die Vorrichtung (10) für das Backen in übereinandergeschichteter Anordnung so konfiguriert ist, dass das Chip-förmige Material (9) erhitzt wird, um übereinandergeschichtet zwischen wärmeleitfähigen Platten (14, 15) gebacken zu werden.

6. Fertigungssystem für behandelte Nahrungsmittel, das
Mittel (4) zum Mischen von trockenem Kartoffelrohmaterialpulver (1), welches Kartoffelgranulate und dergleichen oder Kartoffelflocken umfasst, und Wasser (3) zur Herstellung eines pastösen oder stückigen Materials (5);
Teilungsmittel (6) zum Quetschen des pastösen oder stückigen Materials (5), um es in individuelle Chip-förmige Materialien zu teilen; und
Backmittel (10) zum Backen jedes individuellen Chip-förmigen Materials (9) in übereinandergeschichteter Anordnung, um einen Chip-förmigen Artikel zu bilden; aufweist, **gekennzeichnet durch**
Verformungserhitzungsmittel (18) zum Erhitzen des Chip-förmigen Artikels unter Bildung eines Produkts (20A) in Form eines gekrümmten Chips, wobei das Verformungserhitzungsmittel (18) so angeordnet ist, dass der Chip-förmige Artikel separat von dem Backmittel (10), das jedes individuelle Chip-förmige Material backt, Verformungserhitzen unterzogen wird, und das Backmittel (10) so angeordnet ist, dass jedes individuelle Chip-förmige Material Backen unterzogen wird, bevor das Verformungserhitzungsmittel (18) den Chip-förmigen Artikel Verformungserhitzen unterzieht.

7. Fertigungssystem nach Anspruch 6, bei dem das pastöse oder stückige Material (5) ein oder mehrere zusätzliche Rohmaterialien oder eine oder mehrere zusätzliche Würzen ausgewählt aus Kochsalz, Umami-Würzen, Meeresalgen, Gewürzen, Sesamkörnern, Cerealien, Nüssen, Fischereierzeugnissen, Gemüsen und dergleichen enthält.

8. Fertigungssystem nach Anspruch 6 oder 7, bei dem das Backen in übereinandergeschichteter Anordnung Druckbeaufschlagung beim Backen beinhaltet.

9. Fertigungssystem nach Anspruch 6, 7 oder 8, bei dem die Vorrichtung (10) für das Backen in übereinandergeschichteter Anordnung so konfiguriert ist, dass das Chip-förmige Material erhitzt wird, um übereinandergeschichtet von oben und unten gebacken zu werden.

10. Fertigungssystem nach einem der Ansprüche 6 bis 9, bei dem die Vorrichtung (10) für das Backen in übereinandergeschichteter Anordnung so konfiguriert ist, dass das Chip-förmige Material erhitzt wird, um übereinandergeschichtet zwischen wärmeleitfähigen Platten (14, 15) gebacken zu werden.

11. Herstellungsverfahren für behandelte Nahrungsmittel, bei dem
trockenes Kartoffelrohmaterialpulver (1), welches Granulate und dergleichen oder Kartoffelflocken umfasst, und Wasser (3) zur Herstellung eines pastösen oder stückigen Materials (5) gemischt werden;
das pastöse oder stückige Material (5) gequetscht wird, um es in individuelle Chip-förmige Materialien (9) zu teilen; und
jedes individuelle Chip-förmige Material (9) gebacken wird, während es übereinandergeschichtet ist, um einen Chip-förmigen Artikel zu bilden; **gekennzeichnet durch** den Schritt, bei dem
der Chip-förmige Artikel getrennt von dem Backschritt jedes individuellen Chip-förmigen Materials (9) unter Bildung eines Produkts (20A) in Form eines gekrümmten Chips verformend erhitzt wird, wobei der Backschritt vor dem Verformungserhitzungsschritt erfolgt.

12. Herstellungsverfahren nach Anspruch 11, bei dem das pastöse oder stückige Material (5) ein oder mehrere zusätzliche Rohmaterialien oder eine oder mehrere zusätzliche Würzen ausgewählt aus Kochsalz, Umami-Würzen, Meeresalgen, Gewürzen, Sesamkörnern, Cerealien, Nüssen, Fischereierzeugnissen, Gemüsen und dergleichen enthält.

13. Herstellungsverfahren nach Anspruch 11 oder 12, bei dem das Backen in übereinandergeschichteter Anordnung Druckbeaufschlagung beim Backen beinhaltet.

14. Herstellungsverfahren nach Anspruch 11, 12 oder 13, bei dem die Vorrichtung (10) für das Backen in übereinandergeschichteter Anordnung so konfiguriert ist, dass das Chip-förmige Material (9) erhitzt wird, um übereinandergeschichtet von oben und unten gebacken zu werden.

15. Herstellungsverfahren nach einem der Ansprüche 11 bis 14, bei dem die Vorrichtung (10) für das Backen in übereinandergeschichteter Anordnung so konfiguriert ist, dass das Chip-förmige Material (9) erhitzt wird, um übereinandergeschichtet zwischen wärmeleitfähigen Platten (14, 15) gebacken zu werden.

## Revendications

1. Aliment transformé, dans lequel un matériau sous forme de pâte ou un matériau sous forme de bloc (5) obtenu en mélangeant une poudre de matériau brut sec à base de pomme de terre (1) comprenant des granulés de pomme de terre et autres, ou des flocons de pomme de terre et de l'eau (3) est divisé en matériaux sous forme de chip individuelle (9), et ce matériau sous forme de chip est cuit tout en étant composé en sandwich, **caractérisé en ce que** le matériau sous forme de chip est soumis à un chauffage de déformation distinct de la cuisson pour former un produit se présentant sous forme de chip courbée (20A), le matériau sous forme de chip étant soumis à ladite cuisson avant que le matériau sous forme de chip soit soumis audit chauffage de déformation.

2. Aliment transformé selon la revendication 1, dans lequel ledit matériau sous forme de pâte ou ledit matériau sous forme de masse (5) contient un/des matériau(x) brut(s) auxiliaire(s) ou assaisonnement(s) (2) choisis parmi le sel de table, les assaisonnements Umami, les algues, les épices, le sésame, les céréales, les noix, les produits de la pêche, les légumes et autres.

3. Aliment transformé selon la revendication 1 ou 2, dans lequel ladite cuisson pendant la composition en sandwich comprend une pressurisation pendant la cuisson.

4. Aliment transformé selon la revendication 1, 2 ou 3, dans lequel le mécanisme de ladite cuisson pendant la composition en sandwich est configuré de telle sorte que ledit matériau en forme de chip (9) est chauffé pour être cuit tout en étant composé en sandwich du dessus et du dessous.

5. Aliment transformé selon l'une quelconque des revendications précédentes, dans lequel le mécanisme (10) pour ladite cuisson pendant la composition en sandwich est configuré de telle sorte que ledit matériau sous forme de chip (9) est chauffé pour être cuit tout en étant composé en sandwich entre des plaques thermiquement conductrices (14, 15).

6. Système de fabrication pour aliments transformés, comprenant :
un moyen (4) de mélangeage d'une poudre de matériau brut sec à base de pomme de terre (1) comprenant des granulés de pomme de terre et autres, ou des flocons de pomme de terre et de l'eau (3) pour la préparation d'un matériau sous forme de pâte ou d'un matériau sous forme de masse (5) ;
un moyen de division (6) pour serrer le matériau sous forme de pâte ou le matériau sous forme de masse (5) pour le diviser en matériaux sous forme de chip individuelle ; et
un moyen de cuisson (10) pour cuire chaque matériau sous forme de chip individuelle (9) pendant qu'il est composé en sandwich pour former un article en forme de chip ; **caractérisé par**
un moyen de chauffage de déformation (18) pour chauffer l'article sous forme de chip pour former un produit (20A) prenant la forme de chip courbée, ledit moyen de chauffage de déformation (18) étant conçu pour soumettre l'article en forme de chip à un chauffage de déformation distinct du moyen de chauffage (10) cuisant chaque matériau sous forme de chip individuelle, et le moyen de cuisson (10) étant conçu pour soumettre chaque matériau sous forme de chip individuelle à une cuisson avant que le moyen de chauffage de déformation (18) soumette l'article sous forme de chip à un chauffage de déformation.

7. Système de fabrication selon la revendication 6, dans lequel ledit matériau sous forme de pâte ou le matériau sous forme de masse (5) contient un/des matériau(x) brut(s) auxiliaire(s) ou assaisonnement(s) choisis parmi le sel de table, les assaisonnements Umami, les algues, les épices, le sésame, les céréales, les noix, les produits de la pêche, les légumes et autres.

8. Système de fabrication selon la revendication 6 ou 7, dans lequel ladite cuisson pendant la composition en sandwich comprend la pressurisation pendant la cuisson.

9. Système de fabrication selon la revendication 6, 7 ou 8, dans lequel le mécanisme (10) pour ladite cuisson pendant la composition en sandwich est configuré de telle sorte que ledit matériau en forme de chip est chauffé pour être cuit tout en étant composé en sandwich du dessus et du dessous.

10. Système de fabrication selon l'une quelconque des revendications 6 à 9, dans lequel le mécanisme (10) pour ladite cuisson tout en étant composé en sandwich est configuré de telle sorte que le matériau sous forme de chip est chauffé pour être cuit tout en étant composé en sandwich entre des plaques thermiquement conductrices (14, 15).

11. Procédé de fabrication pour aliments transformés, comprenant les étapes consistant à :
mélanger une poudre de matériau brut sec à base de pomme de terre (1) comprenant des granulés et autres, ou des flocons de pomme de terre et de l'eau (3) pour la préparation d'un matériau sous forme de pâte ou d'un matériau sous forme de masse (5) ;
serrer le matériau sous forme de pâte ou le matériau sous forme de masse (5) pour le diviser en matériaux sous forme de chip individuelle (9) ; et
cuire chaque matériau sous forme de chip individuelle (9) tout en étant composé en sandwich pour former un article en forme de chip ; **caractérisé par** l'étape de :
chauffage de déformation de l'article sous forme de chip pour former un produit (20A) prenant la forme de chip courbée, de façon distincte de l'étape de cuisson de chaque matériau sous forme de chip individuelle (9), ladite étape de cuisson ayant lieu avant l'étape de chauffage de déformation.

12. Procédé de fabrication selon la revendication 11, dans lequel ledit matériau sous forme de pâte ou ledit matériau sous forme de masse (5) contient un/des matériau(x) brut(s) auxiliaire(s) ou assaisonnement(s) choisis parmi le sel de table, les assaisonnements Umami, les algues, les épices, le sésame, les céréales, les noix, les produits de la pêche, les légumes et autres.

13. Procédé de fabrication selon la revendication 11 ou 12, dans lequel ladite cuisson pendant la composition en sandwich comprend la pressurisation pendant la cuisson.

14. Procédé de fabrication selon la revendication 11, 12 ou 13, dans lequel le mécanisme (10) de ladite cuisson pendant la composition en sandwich est configuré de telle sorte que ledit matériau sous forme de chip (9) est chauffé pour être cuit tout en étant composé en sandwich du dessus et du dessous.

15. Procédé de fabrication selon l'une quelconque des revendications 11 à 14, dans lequel le mécanisme (10) pour ladite cuisson pendant la composition en sandwich est configuré de telle sorte que ledit matériau sous forme de chip (9) est chauffé pour être cuit tout en étant composé en sandwich entre des plaques thermiquement conductrices (14, 15).
